**Europäisches Patentamt**

**European Patent Office**

**Office européen des brevets**

(19)

(11) Numéro de publication: **0 012 049**
**B1**

(12) **FASCICULE DE BREVET EUROPEEN**

(45) Date de publication du fascicule du brevet: **02.06.82**

(51) Int. Cl.³: **H 04 N 5/50**

(21) Numéro de dépôt: **79400822.7**

(22) Date de dépôt: **05.11.79**

(54) **Indicateur visuel du sens de la variation d'une tension continue variable, notamment tension d'accord dans un récepteur hétérodyne et récepteur de télévision comportant un tel indicateur.**

(30) Priorité: **30.11.78 FR 7833802**

(43) Date de publication de la demande:
**11.06.80 Bulletin 80/12**

(45) Mention de la délivrance du brevet:
**02.06.82 Bulletin 82/22**

(84) Etats contractants désignés:
**DE FR GB IT**

(56) Documents cités:
**FR - A - 2 357 106**

(73) Titulaire: **THOMSON-BRANDT**
**173, Boulevard Haussmann**
**F-75360 Paris Cedex 08 (FR)**

(72) Inventeur: **Geiger, Erich**
**"THOMSON-CSF" - SCPI 173, bld Haussmann**
**F-75360 Paris Cedex 08 (FR)**

(74) Mandataire: **Schmolka, Robert et al,**
**THOMSON-CSF SCPI 173, Bld Haussmann**
**F-75360 Paris Cedex 08 (FR)**

Courier Press, Leamington Spa, England.

Indicateur visuel du sens de la variation d'une tension continue variable, notamment tension d'accord
dans un récepteur hétérodyne et récepteur de télévision comportant un tel indicateur

La présente invention concerne un dispositif électronique permettant l'indication visuelle du sens de la variation d'une tension continue variable, notamment de la tension d'accord appliquée à des diodes à capacité variable équipant la tête haute-fréquence (amplificateur d'entrée, mélangeur et oscillateur local), dite "tuner" dans la littérature anglo-américaine, d'un récepteur hétérodyne, notamment de télévision.

Les têtes haute-fréquence (tuners) actuellement construites comportent des circuits résonnants haute-fréquence à fréquence centrale variable constituant, d'une part, des filtres passe-bande accordables équipant les circuits d'entrée et de sortie de l'étage amplificateur H.F. et/ou du mélangeur (hétérodyne) et, d'autre part, le circuit oscillant de l'oscillateur local alimentant le mélangeur, dont les réactances variables respectives qui permettent la variation de leur accord comprennent des diodes à capacité variable ou "varicaps" dont la capacité varie en fonction de leur tension de polarisation inverse.

Il est connu d'indiquer l'accord d'une circuit résonnant de ce type soit mécaniquement en couplant mécaniquement le curseur du potentiomètre d'accord fournissant cette tension de polarisation inverse à un système indicateur visuel de la position du curseur. Il est également connu d'appliquer directement cette tension de polarisation à un appareil de mesure à bobine mobile, à un dispositif d'affichage analogique de la tension par une rangée de diodes électroluminescentes ou par d'autres systèmes d'affichage connus, par exemple, sur l'écran du tube cathodique (appelé "on-screen-display" dans la littérature anglo-américaine). Pour les dispositifs d'indication mécaniques, il faut prévoir autant d'indicateurs qu'il y a de potentiomètres d'accord, c'est-à-dire de canaux de réception, tandis qu'un système d'affichage électronique ou électrique unique suffit, car le sélecteur de canaux commute la tension d'accord du canal choisi à l'entrée du système.

L'objet principal des indicateurs visuels d'accord est de permettre de renseigner l'utilisateur en ce qui concerne le procédé de recherche du canal de réception désiré et de son accord précis.

L'utilisateur est alors principalement intéressé par les renseignements concernant respectivement:

a) le canal choise par le commutateur du sélecteur, c'est-à-dire la commutation du potentiomètre d'accord désiré (qui peut être indiqué par un voyant inclus dans ce sélecteur);

b) la direction de la variation de la tension d'accord des varicaps (en direction du canal supérieur ou inférieur), ce qui est très important pour la recherche efficace d'une station émettrice;

c) le début ou la fin de la bande de fréquences dans laquelle on recherche la station; et

d) la variation effective (grandeur et signe) de la tension d'accord provoquée par une commutation du sélecteur de canaux.

Le dispositif indicateur électronique visuel, objet de l'invention, permet d'indiquer les trois derniers des quatre critères ci-dessus à l'aide de deux lampes de signalisation à décharge gazeuse (néon) de manière très peu coûteuse, c'est-à-dire le sens de la variation et le début et la fin de la course du potentiomètre d'accord, notamment. En ce qui concerne la grandeur de la variation lors d'une commutation de canal, elle est indiquée par la durée de l'allumage de l'une des lampes de signalisation, consécutive à une commutation.

Le dispositif indicateur du sens de la variation d'une tension continue variable est également utilisable pour indiquer le sens de la variation d'une tension prélevée sur le curseur d'un potentiomètre de mesure alimenté sur ses bornes par une tension continue constante, où l'arbre entraînant le curseur est couplé à un élément mobile en rotation ou en translation, d'une tension fournie par une génératrice tachymétrique permettant d'indiquer une décélération ou une accélération.

L'invention a pour objet un indicateur visuel du sens de la variation d'une tension continue variable, notamment de la tension d'accord appliquée à des diodes à capacité variable équipant les circuits résonnants de la tête haute-fréquence d'un récepteur de télévision.

Suivant l'invention, cet indicateur visuel comporte un amplificateur différentiel à deux transistors à couplage par émetteurs, la base du premier transistor étant directement alimenté par la tension continue d'entrée variable et la base du second transistor recevant cette tension à travers un circuit intégrateur passif ou filtre passe-bas comprenant une résistance et un condensateur mémorisant la tension d'accord antérieure, à constante de temps élevée, l'amplificateur différentiel comprenant en outre dans le circuit de son premier transistor, une résistance d'équilibrage compensant la chute de tension produite par le courant de base du second transistor entre les bornes de la résistance du circuit intégrateur, de telle sorte que les tensions émetteur-base des deux transistors soient sensiblement égales, les collecteurs des deux transistors étant respectivement couplés à deux dispositifs de signalisation limineuse de façon à provoquer l'allumage de l'un de ces dispositifs par l'application d'une tension aux bornes de l'un d'eux afin d'indiquer le sens de la variation de la tension et, par conséquent, de la fréquence d'accord, par exemple.

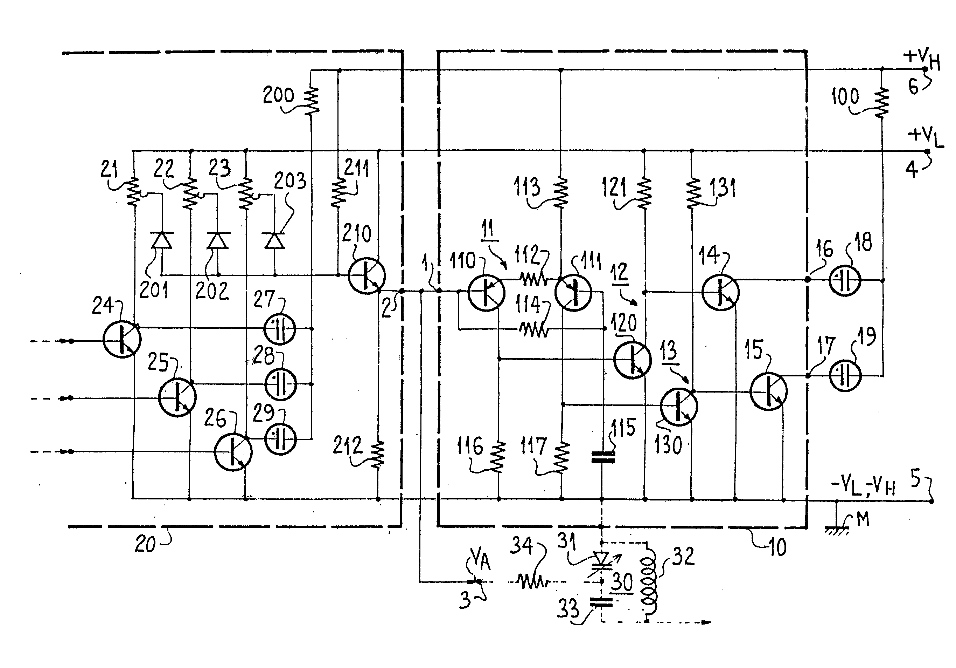

L'invention sera mieux comprise et d'autres de ses caractéristiques et avantages ressortiront de la description ci-après et du dessin annexé s'y rapportant, dont la figure unique est un schéma de principe du circuit électronique du dispositif indicateur visuel conforme à l'invention, utilisé pour indiquer le sens de la variation de la tension d'accord appliquée à des diodes à capacité variable.

Sur la figure, le dispositif indicateur comporte un circuit électronique 10 alimenté sur son entrée de signal 1 par la tension d'accord $V_A$ qui est destinée à polariser à l'envers les diodes à capacité variable du tuner, dont l'une 31 est représentée sur la figure comme faisant partie d'un circuit résonnant parallèle 30 représenté en pointillé, qui comprend, en outre, une inductance 32 et un condensateur fixe 33 connecté en série avec la diode 31.

La tension $V_A$ positive, fournie par la sortie 2 d'un sélecteur de canaux 20 représenté en partie sur la figure, est appliquée à l'entrée 3 du "tuner" (non représenté) et de là à la cathode de la diode "varicap" de chaque circuit résonnant 30 à accord variable de celui-ci, par l'intermédiaire d'une résistance 34 de valeur élevée permettant d'isoler ces circuits résonnants l'un de l'autre et de ne pas modifier leurs coefficients de surtension Q par la faible impédance de sortie du sélecteur 20. Cette résistance 34 réunit l'entrée 3 du "tuner" à la jonction de la cathode de la diode varicap 31 avec le condensateur fixe 33.

Le sélecteur de canaux 20 comprend ici trois potentiomètres 21, 22, 23 dont les premières bornes sont réunies ensemble à une première borne d'alimentation 4 qui est reliée au pôle positif $+V_L$ d'une première source de tension continue d'alimentation stabilisée, fournissant une basse tension continue de 33 volts, par exemple, et dont le pôle négatif $-V_L$ est réuni à une seconde borne d'alimentation 5, reliée à la masse commune M du récepteur. Les secondes bornes des potentiomètres 21, 22, 23 sont respectivement réunies aux collecteurs de trois transistors de commutation du type NPN 24, 25 et 26 dont les émetteurs sont reliés à la seconde borne d'alimentation 5. Les transistors 24, 25, 26 constituent ici des interrupteurs électroniques, destinés à connecter le potentiomètre correspondant au canal choisi, entre les bornes $+V_L$, $-V_L$ de la première source de tension, lorsque l'un d'eux est saturé en réponse à une polarisation positive de sa base. Les collecteurs des transistors 24, 25, 26 sont, par ailleurs, respectivement réunis à des premières électrodes de trois lampes de signalisation à décharge gazeuse (néon) 27, 28, 29 ou à celles de trois paires d'électrodes d'un tube d'affichage numérique (appelé "nixie" dans la littérature anglo-américaine), dont les autres électrodes sont reliées ensemble, par l'intermédiaire d'une résistance 200, à une troisième borne d'alimentation 6 reliée au pôle positif $+V_H$ d'une seconde source de tension continue d'alimentation qui fournit une haute tension de 110 volts, par exemple. Le pôle négatif $-V_H$ de cette seconde source est reliée à la seconde borne 5 et à la masse commune M. L'une des lampes 27, 28, 29 ou le tube d'affichage ("nixie"), amorcé par le transistor qui est saturé, indique le canal de réception choisi par le téléspectateur sur la face avant du récepteur.

Les curseurs des potentiomètres 21, 22, 23 sont respectivement reliés aux cathodes de trois diodes de séparation 201, 202, 203 dont les anodes sont réunies ensemble à la base d'un transistor du type NPN 210, monté en collecteur commun. Cette base est polarisée positivement à travers une résistance 211 de valeur élevée (1 M$\Omega$, par exemple) à une tension supérieure à celle $+V_L$ alimentant les potentiomètres d'accord 21, 22, 23, qui est branchée entre cette base et la troisième borne 6 (haute tension $+V_H$), afin d'assurer la conduction de celle des diodes 201, 202, 203 qui est reliée au curseur du potentiomètre effectivement connecté aux bornes d'alimentation 4 et 5 par le transistor saturé. Les autres diodes étant bloquées parce que leurs cathodes polarisées à la tension $+V_L$ sont plus positives que leurs anodes qui sont à la tension curseur du potentiomètre alimenté, produisant une chute de tension.

Le collecteur du transistor 210 est relié à la borne 4 et son émetteur, constituant la sortie 2 du sélecteur 20, est relié à la borne de masse 5 par l'intermédiaire d'une résistance 212 (de l'ordre de plusieurs dizaines de kiloohms) qui constitue l'impédance de sortie du sélecteur 20.

La sortie 2 du sélecteur 20 fournissant la tension d'accord $V_A$, est reliée à l'entrée 1 du circuit indicateur 10 dont l'étage d'entrée comporte un amplificateur différentiel 11 classique, équipé de deux transistors du type PNP 110 et 111 couplés ensemble par leurs émetteurs respectifs. L'émetteur du premier transistor 110 est réuni à celui du second 111 à travers une première résistance d'équilibrage 112 dont la valeur est calculée d'une manière qui sera expliquée plus loin. L'émetteur du second transistor 111 est réuni à travers une seconde résistance 113 à la troisième borne d'alimentation 6 fournissant la haute-tension positive $+V_H$.

La base du premier transistor 110 est réunie directement à l'entrée 1 du circuit 10, qui est reliée à la base du second transistor 111 par une troisième résistance 114 de valeur élevée (supérieure ou égale à un mégohm). La base du second transistor 111 est également reliée à l'une des bornes d'un condensateur 115 de capacité élevée (supérieure ou égale à un microfarad) dont l'autre borne est reliée à la borne de masse 5 et qui forme avec la résistance 114 un circuit intégrateur à constante de temps élevée ($R_{114} \cdot C_{115}$ supérieure ou égale à une seconde) ou un filtre passe-bas à fréquence de coupure faible. Les collecteurs des deux transistors 110 et 111 sont respectivement reliées à la borne de masse 5 par l'intermédiaire d'une quatrième 116 et d'une cinquième 117 résistance de même valeur (de l'ordre de 100 kiloohms).

Le collecteur du premier transistor 110 est relié à l'entrée d'un premier amplificateur de commutation 12 comprenant un troisième transistor 120 monté en émetteur commun, qui est un transistor de commutation du type NPN. La base du troisième transistor 120 constituant l'entrée du premier amplificateur de commutation 12, sont émetteur est directement relié à la seconde borne d'alimentation 5 (masse commune M et $-V_L$) et son collecteur est réuni à travers une sixième résistance 121 de valeur élevée (de l'ordre de un mégohm) à la première borne d'alimentation 4 ($+V_L$).

De même, le collecteur de second transistor 111 est relié à la base d'un quatrième transistor de commutation du type NPN 130, dont l'émetteur est relié à la borne négative 5 ($-V_L$) et dont le collecteur est réuni, par l'intermédiaire d'une septième résistance 131 à la borne positive 4 ($+V_L$) pour former un second amplificateur de commutation 13 identique au premier 12. Les deux amplificateurs 12, 13 fonctionnent à la manière d'inverseurs logiques à seuil.

Le collecteur du troisième transistor 120 est relié à la base d'un cinquième transistor de commutation NPN 14 et le collecteur du quatrième transistor 130 est relié à la base d'un sixième transistor de commutation NPN 15.

Les cinquième et sixième transistors 14, 15 constituent respectivement des interrupteurs électroniques travaillant dans le mode binaire (bloqué ou saturé), leurs émetteurs étant reliés à la borne d'alimentation négative 5 commune aux deux sources de tension d'alimentation ($-V_L$, $-V_H$). Leurs collecteurs, qui constituent respectivement les deux sorties 16 et 17 du circuit 10, sont respectivement reliées aux premières électrodes de deux lampes à décharge gazeuse (à néon) 18 et 19, dont les secondes électrodes sont réunies ensemble, par l'intermédiaire d'une résistance commune 100, à la troisième borne d'alimentation 6 ($+V_H$).

L'étage de sortie à collecteur commun ("emitter-follower") du sélecteur de canaux est un générateur de tension à impédance interne ($R_G$) relativement faible ($R_G = R_{112} = 68$ kΩ) fournissant la tension d'accord $V_A$ à l'entrée 1 du circuit indicateur 10. Comme cette entrée 1 est reliée directement à la base du premier transistor 110 et à celle du second transistor 111 par l'intermédiaire d'une troisième résistance 114 (1 MΩ) élevée, le courant de base $I_{B111}$ du second transistor 111 provoque aux bornes de cette résistance 114 une chute de tension $\Delta V_{BB} = R_{114} \cdot I_{B111}$ qui constitue une différence de potentiel entre les bases respectives des deux transistors 110 et 111. Si les émetteurs de ceux-ci étaient directement réunis ensemble, l'amplificateur différentiel 11 deviendrai déséquilibré en permanence de manière à fournir deux courants collecteurs différents car leurs tensions émetteurs-base $V_{BE}$ respectives différerait justement par cette chute de tension $\Delta V_{BB}$.

Il est donc nécessaire de réaliser l'égalisation de ces tensions émetteur-base $B_{BE110}$ et $V_{BE111}$, par exemple, à l'aide de la première résistance 112, dite d'équilibrage, insérée entre l'émetteur du premier transistor 110 et celui du second 111, dans laquelle le courant émetteur $I_{E110}$ du premier transistor 110 provoque la même chute de tension

$$\Delta V_{EE} = R_{112} \cdot I_{E110}$$

que le courant de base $I_{B111}$ du second 111 dans la troisième résistance 114 à l'état d'équilibre (les courants collecteur $I_C$ et émetteur $I_E$ des deux transistors étant sensiblement égaux). Alors en mettant $I_E \simeq h_{21E} \cdot I_B$, où $h_{21E}$ est le gain de courant, on obtient

$$I_E \cdot R_{112} = h_{21E} \cdot I_B \cdot R_{112} = I_B \cdot R_{114}$$

d'où il découle que $R_{112} = R_{114}/h_{21E}$. Ceci donne pour $R_{114}$ choisie en fonction de la constante temps désirée à 1 MΩ et $h_{21E}$ des deux transistors apairés étant de 300, une résistance d'équilibrage $R_{112} = 3,3$ kΩ. Il est également possible d'équilibrer l'amplificateur différentiel 11 en insérant une résistance de même valeur que $R_{114}$, entre la jonction de la résistance d'intégration 114 avec l'entrée 1 et la base du premier transistor 110.

Si l'on fait varier la tension d'accord $V_A$ en tournant le potentiomètre 21 du canal commuté par la saturation du transistor 24 du sélecteur 20, la tension appliquée à la base du premier transistor 110 varie simultanément avec la variation $V_{B110} = \Delta V_A$ de cette tension, tandis que celle transmise à la base du second transistor 111 à travers le circuit intégrateur 114, 115 croîtra suivant une expression

$$V_{B111} = \Delta V_A (1 - e^{-t}/R_{114} \cdot C_{115}).$$

La différence entre les tensions de base

$$\Delta V_{BB} = V_{B110} - V_{B111}$$

sera donc égale à $\Delta V_A \cdot e^{-t}/R_{114} \cdot C_{115}$ et chutera donc exponentiellement de sa valeur initiale $\Delta V_A$ vers zéro pour atteindre à un instant séparé de celui où la variation $\Delta V_A$ s'est produite d'un intervalle égal à la constante de temps $R_{114} \cdot C_{115}$ (1 seconde), la valeur de 0,367 $\Delta V_A$.

Si le circuit de l'amplificateur différentiel 11 est symétrique, cette différence de tension transitoire entre les deux bases $\Delta V_{BB}$ provoque un déséquilibre entre les courants collecteurs $I_{C110}$ et $I_{C111}$, où à une variation positive $\Delta V_A$ de la tension d'accord répond une diminution instantanée du courant collecteur $I_{C110}$ du premier transistor 110 qui provoquerait également une diminution du courant $I_{113}$ dans la résistance émetteur 113 commune aux deux transistors, constitué par la somme des deux courants émetteurs $I_{E110}$ et $I_{E111}$, si ce dernier ne subissait pas une augmentation du fait qu'une diminution de la chute de tension

$$V_{CC}-V_{E111}=R_{113}(I_{E110}+I_{E111})$$

provoquerait une augmentation de la tension émetteur-base $V_{EB111}$ entraînant une augmentation des courants collecteur $I_{C111}$, émetteur $I_{E111}$ et base $I_{B111}$ du second transistor 111, car la tension aux bornes du condensateur d'intégration 115 ne suit la variation $\Delta V_A$ que beaucoup plus lentement. D'où il ressort que, pour une variation $\Delta V_A$ positive de la tension d'accord, le courant collecteur $I_{C110}$ ainsi que la tension collecteur $V_{C110}=R_{116}\cdot I_{C110}$ du premier transistor 110 diminuent tandis que ceux $I_{C111}$ et $V_{C111}$ du second 111 augmentent. Une variation $\Delta V_A$ negative de la tension d'accord produit l'effet inverse. La tension émetteur $V_{E111}$ égale à

$$V_{CC}-R_{113}\cdot I_{113}=V_{CC}-R_{113}(I_{C110}+I_{C111})$$

reste sensiblement constante quelle que soit la variation $\Delta V_A$.

On choisit la valeur de la résistance émetteur 113 commune en fonction de la tension d'alimentation $V_H$, de façon à obtenir, à l'état d'équilibre de l'amplificateur différentiel 11, aux bornes des résistances collecteurs 116 et 117 des chutes de tension $I_{C110}\cdot R_{116}$ et $I_{C111}\cdot R_{117}$ égales et suffisantes pour commander la saturation des transistors 120 et 130 équipant respectivement les deux amplificateurs de commutation 12 et 13.

La saturation des troisième et quatrième transistors 120, 130 entraîne le blocage respectif des cinquième et sixième transistors de commutation 14, 15 de sorte que les lampes 18, 19 sont éteintes en l'absence de variation de la tension d'accord $V_A$.

Lorsque la tension d'accord $V_A$ subit une variation $\Delta V_A$, le courant collecteur $I_C$ de l'un des premier et second transistors 110, 111 diminue suffisamment pour commander le blocage de l'un des transistors de commutation 120, 130, l'autre restant saturé. Le blocage de l'un des transistors 120, 130 annule son courant collecteur $I_C$ et augmente sa tension collecteur $V_C$ jusqu'à ce que la diode constituant la jonction PN base-émetteur de l'un des transistors-interrupteurs 14, 15 ne se mette à conduire un courant de base $I_B$ en provoquant une chute de tension aux bornes de l'une des résistances 121, 131 qui sont alternativement des résistances collecteurs des transistors de commutation 120, 130 et des résistances de polarisation des bases respectives des transistors interrupteurs 14, 15. Leur valeur $R_{121}$, $R_{131}$ (1 MΩ) est donc choisie en fonction de leur tension d'alimentation afin que les courants de base $I_{B14}$ et $I_{B15}$ soient suffisants pour amener les transistors-interrupteurs 14, 15 qui commandent respectivement l'amorçage des lampes à néon 18, 19, à saturation.

De ce qui précède, on peut voir aisément que l'on ne demande pas ici à l'amplificateur différentiel 11 d'indiquer par une égalité des courants collecteurs $I_{C110}$, $I_{C111}$ celle des tensions d'entrée, mais à signaler une variation relativement rapide de sa tension d'entrée et le sens (signe) de cette variation par la diminution de l'un des courants collecteurs au-dessous d'une valeur de seuil minimale permettant un amorçage des lampes 18, 19, qui est désignée dans ce qui suit $I_{CA}$.

Cette valeur de seuil $I_{CA}$ peut être calculée à partir du courant $I_{BS}$ et de la tension $V_{BS}$ de base nécessaires pour amener les transistors 120 et 130 à la saturation.

Le courant collecteur de saturation $I_{CS}$ étant approximativement égal à $V_l/R_{121}=33.10^{-6}A$, $I_{BS}$ est égal à $I_{CS}/h_{21E}$ c'est-à-dire à

$$33.10^{-6}/200=0,165\cdot 10^{-6}A.$$

La tension de saturation $V_{BS}$ est calculé de la formule bien connue

$$V_{BS}=\frac{kT}{q_e}\ln\frac{I_{CS}}{I_{ES}},$$

où $k$ est la constante de Boltzmann, $T$ la temperature absolue en degrés Kelvin, $q_e$ le charge d'un électron en Coulombs et $I_{ES}$ le courant de saturation émetteur-base avec collecteur relié à la base. Cette formule donne $V_{BS}$ égal à 629 millivolts, pour $I_{ES}$ égal à $10^{-15}A$. On obtient alors un courant de seuil

$$I_{CA}=V_{BS}/R_{116}+I_{BS}$$

de l'ordre de 6,5 microampères. Cela signifie que si le courant collecteur de l'un des transistors 110, 111 descend en dessous de cette valeur $I_{CA}$, l'une des lampes 18, 19 est amorçée et reste allumée pendant l'intervalle de temps où ce courant collecteur reste inférieur à $I_{CA}$.

Dans l'état d'équilibre où $V_A$ est nulle, les courants collecteurs $I_{C110}$ et $I_{C111}$ sont égaux ainsi que les courants émetteurs $I_{E110}$ et $I_{E111}$ et leur somme est égale au courant $I_{113}$ dans la résistance émetteur 113 que l'on choisit avantageusement supérieur ou égal à 60 et inférieur ou égal à 100 microampères. Pour obtenir une indication par l'amorçage de l'une des lampes à néon 18, 19, l'un des courants collecteurs de l'amplificateur différentiel 11 doit devenir inférieur ou égal à $I_{CA}$. On peut alors calculer la variation minimale $\Delta V_{A\,min}$ de la tension d'accord nécessaire à provoquer une indication, de la formule suivante

$$\Delta V_{A\,min}=k\cdot T/q_e\cdot\ln(I_{113}/I_{CA}-1)-R_{113}(2I_{CA}-I_{113})$$

qui donne pour $I_{113}=60$ microampères, $T=300°$ K, $q_e=1,6\cdot 10^{-19}As$, $k=1,38\cdot 10^{-23}VAs/°K$ et $I_{CA}=6,5\,\mu A$, approximativement 210 millivolts.

Si l'on dispose d'un potentiomètre d'accord 21—23 où en 20 tours de rotation, on obtient une différence de $V_L - V_{CE\ sat} = 30$ V, on peut calculer que 0,15 tours rapidement effectués provoque un saut de tension de 0,21 volts pour provoquer un bref allumage de l'une des lampes 18, 19. La durée de l'allumage de la lampe 18, 19 à partir de la fin de la variation de la tension d'accord dépendra alors principalement de l'amplitude de cette variation $\Delta V_A$ et elle peut être calculée de la courbe de chute exponentielle de la différence de potentiel entre les bases respectives des transistors 110 et 111, mentionnée précédemment et qui dépend de la constante de temps $R_{114} \cdot C_{115}$ du circuit intégrateur. La durée d'allumage $t_A$ sera alors égale à $R_{114} \cdot C_{115}$ (1n $\Delta V_A$ — 1n $\Delta V_{A\ min}$) à condition que $\Delta V_A$ dépasse $\Delta V_{A\ min}$ et que la variation de la tension d'accord ne soit pas trop lente. La vitesse de la variation nécessaire pour obtenir une indication d'accord décroît avec l'amplitude de cette variation.

Lors d'une commutation de canal correspondant à une station émettrice dont la porteuse d'image est à une fréquence différente de celle du canal reçu antérieurement, on obtient également une variation quasi-instantanée de la tension d'accord, qui provoque l'allumage de l'une des lampes 18, 19.

Lorsque la variation de la tension $V_A$ est positive, la diminution du courant $I_{C110}$ provoque l'allumage de la lampe 18 indiquant un changement de fréquence vers une valeur supérieure, car la capacité des diodes varicap 31 décroît avec l'accroissement de la tension de polarisation inverse. De même, l'allumage de la lampe 19 indique une variation négative de la tension d'accord qui provoque une augmentation du courant $I_{C110}$ et une diminution correspondante du courant $I_{C111}$, lors d'une variation de la fréquence vers une valeur inférieure. Lorsque, durant la recherche d'une station, on atteint le début ou la fin du potentiomètre 21—23 à commande rotative, les lampes à néon 18, 19 s'éteignent après un intervalle de temps $t_A$ mentionné précédemment. Ceci indique à l'utilisateur qu'il doit arrêter de tourner l'axe du potentiomètre 21—23 dans le même sens, c'est-à-dire qu'il doit le tourner à l'envers.

Avec une indication supplémentaire du canal commuté par le sélecteur 20 et de la bande sélectionnée, l'indicateur de la variation de tension d'accord à deux lampes à néon 18, 19 facilite, même à un utilisateur peu familiarisé avec le récepteur, la recherche d'une station émettrice désirée.

On notera ici qu'il est possible de remplacer les lampes à néon par d'autres dispositifs d'indication lumineuse tels que des diodes électroluminescentes, par exemple, que l'on pourrait insérer directement dans les circuits collecteur respectifs des transistors PNP 110, 111 de l'amplificateur différentiel 11, en série avec ou en remplacement des résistances collecteur 116, 117.

On rappellera également que le dispositif indicateur visuel suivant l'invention, permet d'indiquer le sens de la variation d'une tension continue variable quelconque, telle que fournie par le curseur d'un potentiomètre de mesure, entraîné par un indicateur de niveau d'un liquide (à flotteur), par exemple, par un générateur de tension continue variable (génératrice tachy-métrique), par un diviseur de tension résistif comportant une résistance variable en fonction d'une grandeur physique, telle que la pression (jauge de contrainte piezo-résistive), la température (thermistance), la lumière (photo-résistance ou photodiode), ou par un transducteur classique du type fournissant une tension continue variant en fonction des variations d'une grandeur physique ou électrique tel qu'un bolomètre pour la puissance UHF, un thermocouple pour la température, un quartz pour la pression, ou une cellule photo-voltaïque ou phototransitor pour la lumière.

**Revendications**

1. Indicateur visuel du sens de la variation d'une tension continue variable, notamment de la tension d'accord appliquée à des diodes à capacité variable équipant les circuits résonnants de la tête haute-fréquence (tuner) d'un récepteur hétérodyne, caractérisé par le fait qu'il comprend un circuit électronique (10) qui comporte un amplificateur différentiel (11) muni de deux transistors (110, 111) couplés par leur émetteurs à travers une première résistance (113) commune à l'une (6) des bornes d'alimentation du circuit (10) et dont les collecteurs sont respectivement réunis, par l'intermédiaire de deux résistances (116, 117) de même valeur, à une autre (5) borne d'alimentation du circuit (10), la base du premier transistor (110) étant directement reliée à une sortie (2) fournissant cette tension continue variable, tandis que la base du second transistor (111) est réunie à cette sortie (2) à travers une seconde résistance (114) et, à l'autre borne d'alimentation (5), à travers un condensateur (115) qui forment ensemble un circuit intégrateur retardant l'application de la variation de la tension variable à cette base, l'amplificateur différentiel (11) étant en outre muni, dans le circuit du premier transistor (110), d'une résistance d'équilibrage (112) compensant la chute de tension produite par le courant de base du second transistor (111) entre les bornes de la seconde résistance (114), de telle sorte que, à l'exception des périodes de variation de cette tension ou de celles consécutives à ces variations, les tensions émetteur-base respectives des deux transistors (110, 111) soient sensiblement égales, les collecteurs des deux transistors (110, 111) étant respectivement couplés à deux dispositifs de signalisation par éclairage (18, 19) dont l'allumage, par une tension appliquée à leurs bornes, indique respectivement des variations positives et négatives de la tension continue variable qui dépassent en valeur absolue un seuil prédéterminé.

2. Indicateur visuel suivant la revendication 1, caractérisé par le fait que les collecteurs des deux transistors (110, 111) sont respectivement couplés aux électrodes de commande de deux interrupteurs électroniques (14, 15) permettant de respectivement connecter les dispositifs de signalisation (18, 19) entre les bornes d'une source de tension suffisante pour les allumer.

3. Indicateur visuel suivant l'une des revendications 1 et 2, caractérisé par le fait que la résistance d'équilibrage (112) est insérée entre les émetteurs respectifs du premier (110) et du second (111) transistor, la chute de tension engendrée aux bornes de cette résistance d'équilibrage (112) devant être égale à celle provoquée par le courant de base du second transistor (111) dans la seconde résistance (114), lorsque l'amplificateur (11) est à l'état d'équilibre, l'émetteur du second transistor (111) étant alors relié à la première résistance (113).

4. Indicateur visuel suivant l'une des revendications 2 et 3, caractérisé par le fait que, l'amplificateur différentiel (11) étant équipé de deux transistors (110, 111) de type PNP, les collecteurs de ceux-ci sont respectivement couplés aux électrodes de commande des interrupteurs électroniques (14, 15) par deux amplificateurs de commutation (12, 13) fonctionnant en tant qu'inverseurs logiques, respectivement équipés de transistors de commutation du type NPN (120, 130).

5. Indicateur visuel suivant la revendication 4, caractérisé par le fait que les deux interrupteurs électroniques (14, 15) sont respectivement constitués par des transistors de commutation de puissance du type NPN dont les bases constituant leurs électrodes de commande sont respectivement directement réunies aux collecteurs des transistors (120, 130) des amplificateurs (12, 13), qui sont par ailleurs respectivement réunis par l'intermédiaire de deux résistances (121, 131) à une borne d'alimentation positive (4) du circuit (10), les émetteurs de tous les transistors du type NPN (120, 130, 14, 15) étant reliés à la borne d'alimentation négative (5) de celui-ci.

6. Indicateur visuel suivant la revendication 5, caractérisé par le fait que les collecteurs des transistors-interrupteurs (14, 15) sont respectivement reliés aux premières électrodes de deux lampes à décharge gazeuse (18, 19) dont les secondes électrodes sont réunies ensemble, à travers une résistance de limitation de courant commune (100), au pôle positif d'une source de haute-tension continue dont le pôle négatif est relié à la borne d'alimentation négative (5) du circuit (10).

7. Récepteur de télévision dont les éléments de réactance variable permettant d'accorder les circuits résonnants de sa tête haute-fréquence (tuner) sont constitués par des diodes à capacité variable en fonction de leur tension de polarisation inverse, caractérisé par le fait qu'il comporte un indicateur visuel de la variation de la tension de polarisation de ces diodes suivant l'une des revendications précédentes.

**Claims**

1. Visual indicator of the variation sense of a variable direct voltage, particularly the tuning voltage applied to the variable capacity diodes used in the resonance circuits of the high frequency stage (tuner) of a heterodyne receiver, characterized by the fact that it comprises an electronic circuit (10) comprising a differential amplifier (11) provided with two transistors (110, 111) coupled on their emitters to one (6) of the supply terminals of the circuit (10) through a first common resistor (113) and the collectors of which are respectively connected to another (5) supply terminal of the circuit (10) through two resistors (116, 117) of the same value, the base of the first transistor (110) being directly connected to an output (2) delivering said variable direct voltage, whereas the base of the second transistor (111) is connected to said output (2) through a second resistor (114) and to the other supply terminal (5) through a capacitor (115) together forming an integrating circuit delaying application of the variation of the variable voltage to said base, the differential amplifier (11) being further provided, in the circuit of the first transistor (110), with a balance resistor (112) compensating the voltage drop produced by the base current of the second transistor (111) between the terminals of the second resistor (114), so that, with the exception of the variation periods of said voltage or those following these variations, the respective emitter-base voltages of the two transistors (110, 111) are substantially equal, the collectors of the two transistors (110, 111) being respectively coupled with two light signalling devices (18, 19) the lighting of which by a voltage applied to their terminals indicates positive and negative variations, respectively, of the variable direct voltage exceeding a predetermined level in modulus.

2. Visual indicator in accordance with claim 1, characterized by the fact that the collectors of the two transistors (110, 111) are respectively coupled to the control electrodes of two electronic interrupters (14, 15) respectively allowing the connection of the signalling devices (18, 19) between the terminals of a voltage source sufficient to light them.

3. Visual indicator of any of claims 1 and 2, characterized by the fact that the balance resistor (112) is inserted between the respective emitters of the first (110) and the second transistor (111), the voltage drop produced at the terminals of this balance resistor (112) having to be equal to that produced by the base current of the second transistor (111) in the second resistor (114), when the amplifier (11) is in its balanced state, the emitter of the second transistor (111) being then connected to the first transistor (13).

4. Visual indicator in accordance with any of claims 2 and 3, characterized by the fact that, the differential amplifier (11) being equipped with two PNP transistors (110, 111), the collectors of these are respectively coupled to the control electrodes of electronic interrupters (14, 15) through two switching amplifiers (12, 13) operating as logic inverters and respectively equipped with NPN switching transistors (120, 130).

5. Visual indicator in accordance with claim 4, characterized by the fact that the two electronic interrupters (14, 15) are respectively formed by power switching transistors of NPN type the bases, forming the control electrodes thereof, being directly connected with the collectors of the transistors (120, 130) of the amplifiers (12, 13), which are further respectively connected to one positive supply terminal (4) of the circuit (10) through two resistors (121, 131), the emitters of all of the NPN type transistors (120, 130, 14, 15) being connected with the negative supply terminal (5) of the circuit.

6. Visual indicator in accordance with claim 5, characterized by the fact that the collectors of the interrupter transistors (14, 15) are respectively connected with first electrodes of two gas discharge lamps (18, 19) the second electrodes of which are together connected, through a common current limitation resistor (100), with the positive pole of a direct high voltage source the negative pole of which is connected with the negative supply terminal (5) of the circuit (10).

7. Television receiver the variable reactance elements of which allowing the tuning of the resonance circuits of its high frequency stage (tuner) are formed by diodes having a capacity which is variable in dependence on their reverse polarization voltage, characterized by the fact that it comprises a visual indicator of the variation of the polarization voltage of these diodes, in accordance with any of the preceding claims.

**Patentansprüche**

1. Sichtanzeige des Änderungssinnes einer variablen Gleichspannung, insbesondere der Abstimmspannung, die an die Kapazitätsdioden angelegt wird, mit denen Resonanzkreise der Hochfrequenzstufe (Tuner) eines Überlagerungsempfängers ausgerüstet sind, dadurch gekennzeichnet, daß sie eine Elektronikschaltung (10) enthält, die einen Differenzverstärker (11) mit zwei Transistoren (110, 111) umfaßt, welche an ihren Emittern über einen ersten, gemeinsamen Widerstand (113) an den einen Versorgungsanschluß (6) der Schaltung (10) angekoppelt sind und deren Kollektoren über zwei Widerstände (116, 117) desselben Wertes jeweils an einen anderen Versorgungsanschluß (5) der Schaltung (10) angeschlossen sind, wobei die Basis des ersten Transistors (110) direkt mit einem Ausgang (2) verbunden ist, der diese variable Gleichspannung liefert, während die Basis des zweiten Transistors (111) mit diesem Ausgang (2) über einen zweiten Widerstand (114) verbunden ist und mit dem anderen Versorgungsanschluß (5) über einen Kondensator (115) verbunden ist, welche gemeinsam einen Integrations-kreis bilden, der die Anlegung der Veränderung dieser variablen Spannung an diese Basis verzögert, wobei der Differenzverstärker (11) ferner im Kreis des ersten Transistors (110) mit einem Ausgleichwiderstand (112) versehen ist, der den Spannungsabfall kompensiert, der durch den Basisstrom des zweiten Transistors (111) zwischen den Anschlüssen des zweiten Widerstandes (114) verursacht wird, so daß mit Ausnahme der Änderungsperioden dieser Spannung oder derjenigen, die auf diese Veränderungen folgen, die Emitter-Basis-Spannungen der beiden Transistoren (110, 111) im wesentlichen gleich sind, wobei die Kollektoren der beiden Transistoren (110, 111) jeweils an eine Aufleucht-Signalisiervorrichtung (18, 19) angekoppelt ist, deren Aufleuchten durch eine an ihre Anschlüsse angelegte Spannung positive bzw. negative Veränderungen der variablen Gleichspannung, deren Absolutwert eine vorbestimmte Schwelle überschreitet, anzeigt.

2. Sichtanzeige nach Anspruch 1, dadurch gekennzeichnet, daß die Kollektoren der beiden Transistoren (110, 111) an die Steuerelektroden von zwei elektronischen Unterbrechern (14, 15) angekoppelt sind, die des Anschließen der Signalisiervorrichtungen (18, 19) zwischen die Anschlüsse einer zum Aufleuchten derselben ausreichenden Spannungsquelle ermöglichen.

3. Sichtanzeige nach Anspruch 1 oder 2, dadurch gekennzeichnet, daß der Ausgleichwiderstand (112) zwischen die Emitter des ersten Transistors (110) und des zweiten Transistors (111) eingefügt ist, wobei der an den Anschlüssen dieses Ausgleichwiderstandes (112) erzeugte Spannungsabfall gleich demjenigen sein muß, der durch den Basisstrom des zweiten Transistors (111) in dem zweiten Widerstand (114) erzeugt wird, wenn der Verstärker (11) in Gleichgewichtszustand ist, wobei der Emitter des zweiten Transistors (11) dann mit dem ersten Widerstand (113) verbunden ist.

4. Sichtanzeige nach Anspruch 2 oder 3, dadurch gekennzeichnet, daß bei einem mit zwei PNP-Transistoren (110, 111) ausgerüsteten Differenzverstärker (111) die Kollektoren derselben an die Steuerelektroden der elektronischen Unterbrecher (14, 15) über zwei Schaltverstärker (12, 13) angekoppelt sind, die also logische Inverter arbeiten und jeweils mit NPN-Schalttransistoren (120, 130) ausgerüstet sind.

5. Sichtanzeige nach Anspruch 4, dadurch gekennzeichnet, daß die zwei elektronischen Unterbrecher (14, 15) jeweils aus NPN-Leistungs-Schalttransistoren gebildet sind, deren ihre Steuerelektroden bildende Basen jeweils direkt mit den Kollektoren der Transistoren (120, 130) der Verstärker (12, 13) verbunden sind, die im übrigen jeweils über einen Widerstand (121, 131) an einen positiven Versorgungsanschluß (4) der Schaltung (10) angeschlossen sind, wobei die Emitter aller NPN-Transistoren (120, 130, 14, 15) mit dem negativen Versorgungsanschluß (5) der Schaltung verbunden sind.

6. Sichtanzeige nach Anspruch 5, dadurch gekennzeichnet, daß die Kollektoren der Unterbrecher-Transistoren (14, 15) mit den ersten Elektroden von zwei Gasentladungslampen (18, 19) verbunden sind, deren zweite Elektroden miteinander über einem gemeinsamen Strombegrenzungswiderstand (100) an den positiven Pol einer Hochspannungs-Gleichstromquelle angeschlossen sind, deren negativer Pol mit dem negativen Versorgungsanschluß (5) der Schaltung (10) verbunden ist.

7. Fernsehempfänger, dessen variable Reaktanzelemente, die eine Abstimmung der Resonanzkreise seiner Hochfrequenzstufe (Tuner) gestatten, durch Dioden gebildet, sind deren Kapazität in Abhängigkeit von ihrer Polarisationsspannung in Sperrichtung veränderlich ist, dadurch gekennzeichnet, daß er eine Sichtanzeige zur Anzeige der Änderung der Polarisationsspannung dieser Dioden gemäß einem der vorstehenden Ansprüche umfaßt.